# EUROPEAN PATENT APPLICATION

(11) **EP 4 779 551 A1**
(43) Date of publication of application: **22.07.2026**
(21) Application number: 24885748.4
(22) Date of filing: 30.10.2024
(51) Int. Cl.: G06Q 50/10

(54) **INFORMATION PROVISION DEVICE, INFORMATION PROVISION METHOD, AND INFORMATION PROVISION PROGRAM**

(30) Priority: 30.10.2023 JP 2023185399
(71) Applicant: SoftBank Group Corp., Tokyo 105-7537 (JP)
(72) Inventor: SON, Masayoshi, Tokyo 105-7537 (JP)
(74) Representative: SSM Sandmair
(86) International application number: PCT/JP2024/038658
(87) International publication number: WO 2025/094981

(57) **Abstract**

An information providing apparatus according to an embodiment comprises: a generation unit configured to generate a model that generates an answer to a prompt input by a user, the model being generated by learning a data source provided from a provider that satisfies conditions relating to reliability; a providing unit configured to provide the answer generated by the model to the user; and a billing unit configured to charge the user a usage fee according to a value of the answer.

## Description

### BACKGROUND OF THE INVENTION

### 1. Field of the Invention

Embodiments of the disclosure relate to an information providing apparatus, an information providing method, and an information providing program.

### 2. Description of the Related Art

Conventionally, there has been known systems that generate an answer sentence to a question sentence input by a user using a generative model (for example, see Patent Document 1).

Patent Document 1: Japanese Patent Application Publication No. 2022-503838

In conventional technology, there has been room for improvement in appropriately charging users for service usage when providing answers.

The present invention has been made in view of the above, and an object thereof is to appropriately charge users for service usage.

### SUMMARY OF THE INVENTION

An information providing apparatus according to an aspect of the embodiment comprises: a generation unit configured to generate a model that generates an answer to a prompt input by a user, the model being generated by learning a data source provided from a provider that satisfies conditions relating to reliability; a providing unit configured to provide the answer generated by the model to the user; and a billing unit configured to charge the user a usage fee according to the value of the answer.

According to an aspect of embodiments, it is possible to appropriately charge users for service usage.

### BRIEF DESCRIPTION OF THE DRAWINGS

FIG. 1 is a diagram illustrating an overview of the information providing apparatus according to the embodiment.
FIG. 2 is a functional block diagram illustrating an example configuration of the information providing apparatus according to the embodiment.
FIG. 3 is a diagram illustrating changes in data volume.
FIG. 4 is a flowchart illustrating a flow of reliability determination processing.
FIG. 5 is a flowchart illustrating a flow of pre-training processing.
FIG. 6 is a flowchart illustrating a flow of information providing processing.
FIG. 7 is a diagram schematically illustrating an example of a computer hardware configuration functioning as the information providing apparatus.

### DETAILED DESCRIPTION OF THE PREFERRED EMBODIMENTS

Hereinafter, the present invention will be described through embodiments, but the following embodiments do not limit the invention according to the scope of the claims. Further, not all combinations of features described in the embodiments are necessarily essential as solutions to the invention.

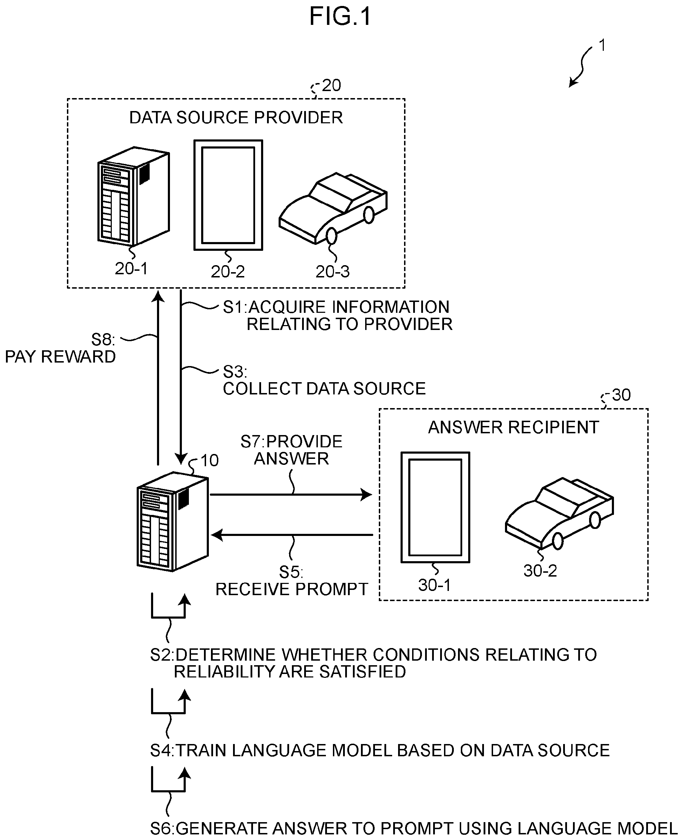

A processing flow of the information providing apparatus according to an embodiment will be described with reference to FIG. 1. FIG. 1 is a diagram illustrating an overview of the information providing apparatus according to the embodiment. FIG. 1 shows a configuration of an information providing system 1 including an information providing apparatus 10 according to the embodiment.

As shown in FIG. 1, the information providing system 1 includes the information providing apparatus 10, a data source provider 20, and an answer recipient 30. The data source provider 20 may be a server 20-1 for distributing information, a user terminal 20-2 possessed by a user, a vehicle 20-3 having an autonomous driving function, or the like. The server 20-1 is, for example, a server managed by a newspaper company, news agency, broadcaster, publisher, or online news provider. The server 20-1 distributes information via a website or SNS (Social Networking Service) on the Internet.

The answer recipient 30 is a recipient of answers to user questions using a language model possessed by the information providing apparatus 10. The answer recipient 30 may be a user terminal 30-1, a vehicle 30-2 having an autonomous driving function, or the like.

As shown in FIG. 1, the information providing apparatus 10 acquires information relating to the provider from the data source provider 20 (step S1). The information relating to the provider includes attribute information of the recipient (such as business content, business scale, number of employees, number of registered members), and information such as the region where the business is deployed.

Subsequently, the information providing apparatus 10 determines, based on the information relating to the provider, whether the recipient satisfies conditions relating to reliability (step S2). For example, the information providing apparatus 10 determines that a provider whose business content is news distribution (such as a newspaper company, news agency, broadcaster, publisher, or online news provider) satisfies the conditions relating to reliability. That is, the information providing apparatus 10 determines that a data source of news articles provided by a provider whose business content is news distribution satisfies conditions relating to reliability because the reliability is high. Further, the information providing apparatus 10 determines that a provider whose business scale is equal to or greater than a certain level satisfies the conditions relating to reliability. The business scale may be, for example, the number of news distributions (circulation for newspaper companies, number of users distributed for news agencies, viewer ratings for broadcasters, circulation for publishers, number of distributions or registered users for online news providers, etc.). That is, the information providing apparatus 10 determines that a provider whose news articles are distributed to a certain number or more users satisfies the conditions relating to reliability.

Further, in a case where the data source provider 20 is a device such as the user terminal 20-2 or the vehicle 20-3, the information providing apparatus 10 determines whether a manufacturer of the device satisfies the conditions relating to reliability. For example, the information providing apparatus 10 determines that a manufacturer whose sales are equal to or greater than a certain level satisfies the conditions relating to reliability.

Subsequently, the information providing apparatus 10 permits communication connection to the data source provider 20 that satisfies the conditions relating to reliability, and collects data sources from the data source provider 20 (step S3). The information providing apparatus 10 and the data source provider 20 are communicatively connected via a VPN (Virtual Private Network).

The data source is data in the form of text, voice, image, etc., distributed by the server 20-1 of the data source provider 20. The data source may also be user posts (text, voice, image, etc.) provided by the user terminal 20-2. The data source may also be past travel routes provided by the vehicle 20-3, congestion status of roads or sidewalks while traveling, travel time to the destination, or behavior of the vehicle 20-3 when traveling to the destination (acceleration, braking, steering, etc.).

The information providing apparatus 10 performs training of a model based on the acquired data source. The model is a language model. As the language model, for example, ChatGPT by OpenAI is known (reference: https://openai.com/blog/chatgpt). The language model may also be a generative model such as a GAN (Generative Adversarial Network) or VAE (Variational Autoencoder) using a neural network.

In this embodiment, the language model generates an answer text to a query text (hereinafter, prompt) input by a user. The model is pre-trained using a data source. The training of the model may be performed by a known machine learning method.

As a result, the model becomes capable of generating answers based on a data source. For example, if a prompt includes a keyword "electric vehicle," the model can generate an answer based on news articles related to the keyword. In other words, through the training, a content of news articles comes to influence generation of answers by the model.

In step S1, the information providing apparatus 10 continuously acquires data sources. Therefore, the amount of data sources acquired by the information providing apparatus 10 increases over time.

The information providing apparatus 10 has two models that use different data sources for training. The two models are a standard model and an advanced model.

The information providing apparatus 10 trains two language models based on data sources (step S4). Specifically, the information providing apparatus 10 trains the standard model based on past data sources. The information providing apparatus 10 also trains the advanced model based on current data sources.

Here, the past data sources are data sources acquired up to a certain period in the past from a timing when the model is trained. For example, if the certain period is two years, and training is performed at "2023/6/22 16:05," the past data sources are those acquired from the start of data source acquisition up to "2021/6/22 16:05."

On the other hand, the current data sources are data sources acquired up to a timing when the model is trained. For example, if training is performed at "2023/6/22 16:05," the current data sources are those acquired from a start of data source acquisition up to "2023/6/22 16:05."

The timing of model training may be every second, or even at shorter intervals (for example, every nanosecond).

Here, the information providing apparatus 10 receives a prompt, which is input to a language model by a user (step S5). Then, the information providing apparatus 10 generates an answer to the prompt using a model according to the user's plan (step S6).

A prompt from the user is transmitted to the information providing apparatus 10 via the answer recipient 30. The information providing apparatus 10 also transmits the answer to the answer recipient 30.

The information providing apparatus 10 provides answers as a service. Assume that the service includes a higher premium plan and a lower freemium plan. The premium plan is a subscription plan that charges a fixed fee for a certain period (for example, annually or monthly), or a pay-as-you-go plan where fee is determined according to usage fee. The freemium plan is a free plan. The freemium plan may be replaced with a lower-priced paid plan (for example, a basic plan) than the premium plan.

Further, the information providing apparatus 10 may charge a user a usage fee according to a value of a provided answer, not limited to subscription or pay-as-you-go billing. For example, the information providing apparatus 10 charges a usage fee according to profit obtained by a user from a provided answer. For example, if a user obtains a profit of 1,000,000 yen from a provided answer, the information providing apparatus 10 charges an amount obtained by multiplying 1,000,000 yen by a predetermined coefficient (less than 1). If the profit obtained by the user increases from 100,000 yen to 1,000,000 yen due to the provided answer, the information providing apparatus 10 charges an amount obtained by multiplying the increased 900,000 yen by the above coefficient. The above coefficient may be a predetermined value, or may be determined by the data source provider 20 that provided the data source on which the answer was based. If the information providing apparatus 10 cannot grasp the profit obtained by a user, it may charge a predetermined amount. Alternatively, the information providing apparatus 10 may estimate a profit from user's asset information (such as sales or profit amount) and a content of an answer, and charge an amount obtained by multiplying the estimated profit by the above coefficient. Further, if the information providing apparatus 10 provides an answer relating to business improvement, it charges an amount obtained by multiplying a fixed cost (such as personnel expenses or consumables expenses) that could be reduced by the business improvement by the above coefficient. If the provided answer does not directly lead to profit acquisition, the information providing apparatus 10 determines an amount to be charged according to a value of the answer. For example, if the information providing apparatus 10 provides an answer relating to new knowledge for a user, it measures the number of times the same answer has been provided to other users in the past, and the fewer the number of times provided, the higher the amount charged. This is because a smaller number of times provided means that fewer users have the same knowledge, and thus the rarity (value) is higher. Further, when accepting a data source from the data source provider 20, the information providing apparatus 10 may also accept the amount to be charged if a data source is used in an answer. In this case, the information providing apparatus 10 determines the validity of an accepted amount, and if it is determined to be valid, sets the amount for a data source. For example, the information providing apparatus 10 calculates an average value of amounts set for other data sources of the same or similar data type (such as economic or sports related), and if the deviation from the average value is less than a predetermined value, determines it to be valid. If deviation from the average value is equal to or greater than the predetermined value, the information providing apparatus 10 determines it to be invalid and requests the data source provider 20 to review the amount.

As described above, according to the present disclosure, since a usage fee is charged according to a value of an answer, for example, when a highly valuable answer is provided, an amount corresponding to the value can be charged, thereby enabling appropriate billing for service usage.

The information providing apparatus 10 differentiates service quality for each plan based on differences in data used for training models. That is, when a user subscribes to the premium plan, the information providing apparatus 10 generates answers using the advanced model. On the other hand, when the user subscribes to the freemium plan, the information providing apparatus 10 generates answers using the standard model.

The information providing apparatus 10 provides a generated answer to a user (step S7). The information providing apparatus 10 may receive prompts and provide answers via a chat-type user interface. Further, when the answer recipient 30 is the vehicle 30-2, the information providing apparatus 10 may display an answer on a display (for example, a navigation device) mounted in the vehicle 30-2. Alternatively, when a prompt is an autonomous driving request to a destination, the information providing apparatus 10 controls a control device of the vehicle 30-2 to perform autonomous driving.

Further, when a user subscribes to the premium plan, the information providing apparatus 10 may update the advanced model based on the latest data sources and generate additional answers. The advanced model thus updated is referred to as a real-time model. The information providing apparatus 10 may provide additional answers generated using the real-time model.

The information providing apparatus 10 continuously acquires data sources and updates the language model even during a period from answer generation to answer provision. By using the real-time model, the information providing apparatus 10 can generate answers reflecting differences that occurred during the period.

Subsequently, when the information providing apparatus 10 provides an answer related to a data source to a user, it pays a reward to the data source provider 20 of the data source (step S8). For example, the information providing apparatus 10 determines a content of a reward to be paid according to the number of times (or number of users) answers related to the data source are provided. The information providing apparatus 10 may differentiate a reward between provision by the standard model and provision by the advanced model. For example, the information providing apparatus 10 pays a higher reward when an answer related to a data source is provided via the advanced model than when provided via the standard model.

As described above, by collecting data sources only from data source providers 20 that satisfy conditions relating to reliability, the information providing apparatus 10 can avoid mixing low-reliability data sources in language model training, thereby improving the reliability of provided information.

Further, in the information providing system 1, the information providing apparatus 10 and the data source providers 20 (server 20-1, user terminal 20-2, and vehicle 20-3) are equipped with semiconductor chips manufactured by the same manufacturer. Each semiconductor chip may perform machine learning or deep learning by itself.

Further, the semiconductor chips used in the information providing apparatus 10 and the data source providers 20 are sized to fit each housing. For example, assuming a chip size of the information providing apparatus 10 is XL size, L size is used for the server 20-1 and vehicle 20-3, and S or M size is used for the user terminal 20-2. For data source providers 20 with even smaller housings than the user terminal 20-2, SS size is used, and a chip is integrated into an SoC (System on a Chip) as a single chip. The XL size has 200 tiles, L size has 50 tiles, M size has 20 tiles, S size has 10 tiles, and SS size has 2 tiles, but the number of tiles for each size is just an example and is not limited thereto. If accessories such as a camera or microphone are to be attached to the user terminal 20-2, a dedicated accessory chip may be provided in the available space near a semiconductor chip in the SoC.

As described above, by using semiconductor chips manufactured by the same manufacturer in the information providing apparatus 10 and the data source providers 20, a closed system can be established between the information providing apparatus 10 and the data source providers 20, thereby maintaining a secure state between them. That is, hacking, virus infection, and deepfakes can be highly accurately avoided between the information providing apparatus 10 and the data source providers 20, and privacy can be ensured between them.

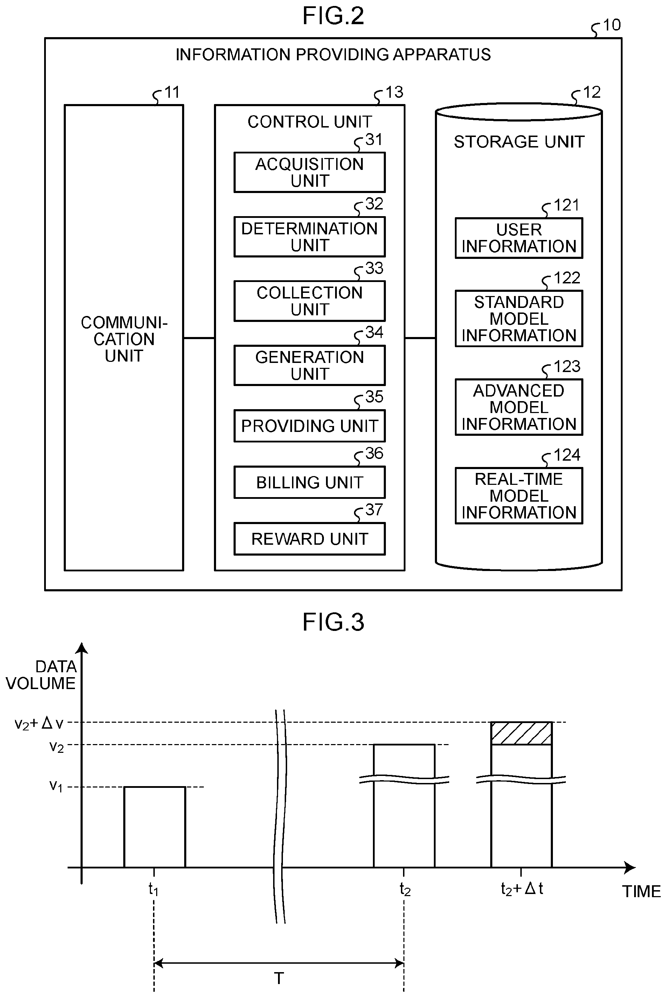

A configuration of the information providing apparatus 10 will be described with reference to FIG. 2. FIG. 2 is a functional block diagram illustrating an example configuration of the information providing apparatus according to the embodiment.

As shown in FIG. 2, the information providing apparatus 10 includes a communication unit 11, a storage unit 12, and a control unit 13.

The communication unit 11 transmits and receives information to and from the data source provider 20 or the answer recipient 30 via a network.

The storage unit 12 is implemented by, for example, a semiconductor memory device such as RAM (Random Access Memory) or flash memory, or a storage device such as an HDD (Hard Disk Drive), SSD (Solid State Drive), or optical disk. The storage unit 12 stores various programs and various data. The storage unit 12 includes user information 121, standard model information 122, advanced model information 123, and real-time model information 124.

The user information 121 is information about a plan to which each user subscribes. For example, the user information 121 is information associating a user's ID with the premium plan or the freemium plan.

The standard model information 122, the advanced model information 123, and the real-time model information 124 are information such as parameters for constructing the standard model, advanced model, and real-time model, respectively. The parameters for constructing the model include, for example, weights and biases of a neural network. In model training, these parameters are updated.

The control unit 13 is a controller and includes, for example, a microcomputer having a CPU (Central Processing Unit), ROM (Read Only Memory), RAM, input/output ports, and various circuits. The control unit 13 may also be implemented by hardware such as an ASIC (Application Specific Integrated Circuit) or FPGA (Field Programmable Gate Array). The control unit 13 includes an acquisition unit 31, a determination unit 32, a collection unit 33, a generation unit 34, a providing unit 35, a billing unit 36, and a reward unit 37.

The acquisition unit 31 acquires information relating to a provider from the data source provider 20. Information relating to the provider includes attribute information of a recipient (such as business content, business scale, number of employees, number of registered members), and information such as a region where business is deployed.

The determination unit 32 determines, based on information relating to a provider, whether a recipient satisfies conditions relating to reliability. For example, the determination unit 32 determines that a provider whose business content is news distribution (such as a newspaper company, news agency, broadcaster, publisher, or online news provider) satisfies the conditions relating to reliability. That is, the determination unit 32 determines that a data source of news articles provided by a provider whose business content is news distribution satisfies the conditions relating to reliability because the reliability is high. Further, the determination unit 32 determines that a provider whose business scale is equal to or greater than a certain level satisfies the conditions relating to reliability. The business scale may be, for example, the number of news distributions (circulation for newspaper companies, number of users distributed for news agencies, viewer ratings for broadcasters, circulation for publishers, number of distributions or registered users for online news providers, etc.). That is, the determination unit 32 determines that a provider whose news articles are distributed to a certain number or more users satisfies the conditions relating to reliability.

Further, when the data source provider 20 is a device such as the user terminal 20-2 or the vehicle 20-3, the determination unit 32 determines whether a manufacturer of a device satisfies the conditions relating to reliability. For example, the determination unit 32 determines that a manufacturer whose sales are equal to or greater than a certain level satisfies the conditions relating to reliability.

The collection unit 33 collects data sources from the data source provider 20 determined by the determination unit 32 to satisfy the conditions relating to reliability. The collection unit 33 also collects (accepts) information on an amount to be charged if a data source is used in an answer. The collection unit 33 accumulates the collected data sources in the storage unit 12. The collection unit 33 continuously collects data sources asynchronously with operation of other processing units. That is, the collection unit 33 continues to collect data sources asynchronously with processes such as model training, answer generation, and provision.

The amount of data accumulated in the storage unit 12 by the collection unit 33 changes over time as shown in FIG. 3. FIG. 3 is a diagram illustrating changes in data volume.

The horizontal axis of FIG. 3 represents time (timestamp). The vertical axis of FIG. 3 represents data volume. A data volume at the current time t2 is v2. A data volume at time t1, which is a period T before time t2, is v1. v1 is smaller than v2.

Further, suppose that advanced model training is performed at time t2, and a time when an answer is generated using the trained advanced model is t2+Δt. Since the collection unit 33 continues to collect data, a data volume increases by Δv during the period Δt.

The generation unit 34 generates a language model. Specifically, the generation unit 34 generates a standard model and an advanced model. Specifically, the generation unit 34 trains two language models based on data sources. Specifically, the generation unit 34 trains the standard model based on past data sources. The generation unit 34 also trains the advanced model based on current data sources.

Further, the generation unit 34 updates parameters of the model through training. The generation unit 34 may regenerate the model at each training timing, or may reflect difference in data sources from the previous training in the model.

Further, the generation unit 34 determines the reliability of the data sources collected from providers, and determines whether to use them for language model training based on the reliability. For example, the generation unit 34 analyzes the content of the data source (text analysis, voice analysis, image analysis), and if it is determined that a content of a data source may be false, prohibits the use of the data source for language model training.

The providing unit 35 generates and provides an answer to a prompt received from a user using the generated language model.

The providing unit 35 refers to the user information 121 and determines a user's plan. The providing unit 35 determines whether a user is subscribed to the premium plan or the freemium plan.

The providing unit 35 inputs a prompt into the language model and generates an answer. The providing unit 35 generates an answer to the prompt input by a user using one of a plurality of language models that differ in an amount of data sources used for training. For example, the providing unit 35 generates an answer using either the standard model or the advanced model.

The providing unit 35 provides an answer generated by the language model to a user together with information indicating a provider of data sources used for training the language model used to generate the answer. For example, the providing unit 35 may display an information providing screen on a user terminal. For example, the providing unit 35 may receive prompts and provide answers via a chat-type user interface. Further, when the answer recipient 30 is the vehicle 30-2, the providing unit 35 may display the answer on a display (for example, a navigation device) mounted in the vehicle 30-2. Alternatively, when a prompt is an autonomous driving request to a destination, the providing unit 35 controls a control device of the vehicle 30-2 to perform autonomous driving.

Further, the billing unit 36 may charge the user a fee according to a value of a provided answer, not limited to subscription or pay-as-you-go billing. For example, the billing unit 36 charges an amount according to a profit obtained by a user from the provided answer. For example, if a user obtains a profit of 1,000,000 yen from the provided answer, the billing unit 36 charges an amount obtained by multiplying 1,000,000 yen by a predetermined coefficient (less than 1). If the profit obtained by a user increases from 100,000 yen to 1,000,000 yen due to the provided answer, the billing unit 36 charges an amount obtained by multiplying the increased 900,000 yen by the above coefficient. The above coefficient may be a predetermined value, or may be determined by the data source provider 20 that provided a data source on which the answer was based. If the billing unit 36 cannot grasp a profit obtained by a user, it may charge a predetermined amount. Alternatively, the billing unit 36 may estimate a profit from the user's asset information (such as sales or profit amount) and a content of the answer, and charge an amount obtained by multiplying the estimated profit by the above coefficient. Further, if the billing unit 36 provides an answer relating to business improvement, it charges an amount obtained by multiplying the fixed cost (such as personnel expenses or consumables expenses) that could be reduced by the business improvement by the above coefficient. If the provided answer does not directly lead to profit acquisition, the billing unit 36 determines an amount to be charged according to a value of the answer. For example, if the billing unit 36 provides an answer relating to new knowledge for a user, it measures the number of times the same answer has been provided to other users in the past, and the fewer the number of times provided, the higher the amount charged. This is because a smaller number of times provided means that fewer users have the same knowledge, and thus the rarity (value) is higher. Further, when accepting a data source from the data source provider 20, the billing unit 36 may also accept an amount to be charged if the data source is used in an answer. In this case, the billing unit 36 determines the validity of the accepted amount, and if it is determined to be valid, sets an amount for a data source. For example, the billing unit 36 calculates an average value of amounts set for other data sources of the same or similar data type (such as economic or sports related), and if deviation from an average value is less than a predetermined value, determines it to be valid. If the deviation from the average value is equal to or greater than the predetermined value, the billing unit 36 determines it to be invalid and requests the data source provider 20 to review the amount.

The reward unit 37 pays a reward to the data source provider 20 of a data source when an answer related to the data source is provided to a user. For example, the reward unit 37 determines a content of reward to be paid according to the number of times (or number of users) answers related to a data source are provided. The reward unit 37 may differentiate reward between provision by the standard model and provision by the advanced model. For example, the reward unit 37 pays a higher reward when an answer related to the data source is provided via the advanced model than when provided via the standard model.

Further, the reward unit 37 receives an amount charged to a user by the billing unit 36 from the user and pays the amount to the data source provider 20.

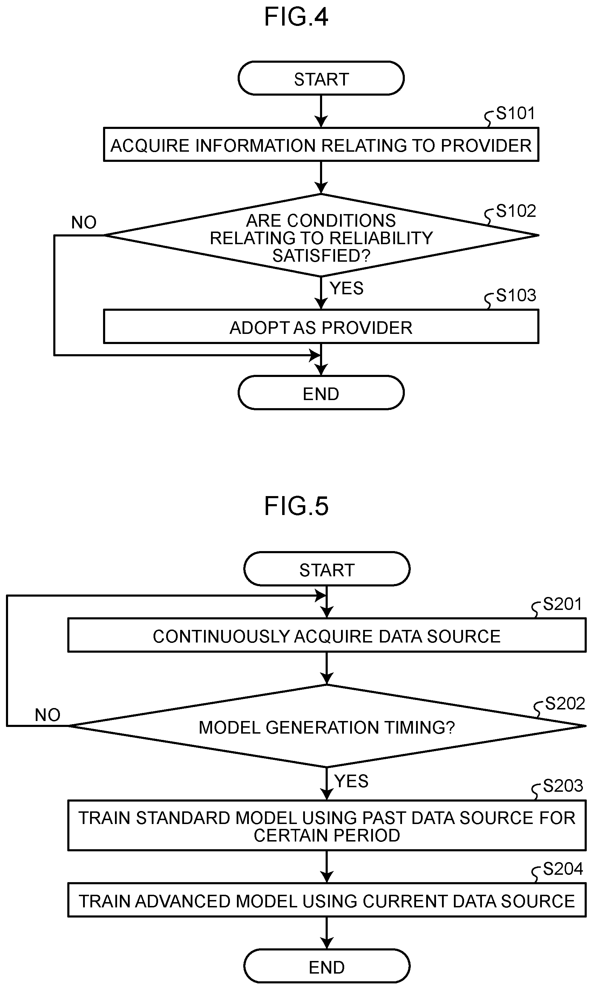

The flow of reliability determination processing will be described with reference to FIG. 4. FIG. 4 is a flowchart illustrating a flow of reliability determination processing.

As shown in FIG. 4, the information providing apparatus 10 acquires information relating to a provider from the data source provider 20 (step S101).

Subsequently, the information providing apparatus 10 determines, based on information relating to a provider, whether the conditions relating to reliability are satisfied (step S102).

If the conditions relating to reliability are satisfied (step S102: Yes), the information providing apparatus 10 adopts a provider as a data source provider (step S103) and ends the processing. On the other hand, if the conditions relating to reliability are not satisfied (step S102: No), the information providing apparatus 10 does not adopt the provider and ends the processing.

The flow of pre-training processing will be described with reference to FIG. 5. FIG. 5 is a flowchart illustrating a flow of pre-training processing.

As shown in FIG. 5, the information providing apparatus 10 continuously acquires data sources (step S201). Next, the information providing apparatus 10 determines whether it is a model generation timing (step S202).

If it is not a model generation timing (step S202: No), the information providing apparatus 10 returns to step S201 and continues to acquire data sources. On the other hand, if it is a model generation timing (step S202: Yes), the information providing apparatus 10 proceeds to step S203.

The information providing apparatus 10 trains the standard model using past data sources for a predetermined period (step S203). The information providing apparatus 10 also trains the advanced model using current data sources (step S204). For example, the information providing apparatus 10 trains the advanced model using current data sources and trains the standard model using data sources up to two years ago.

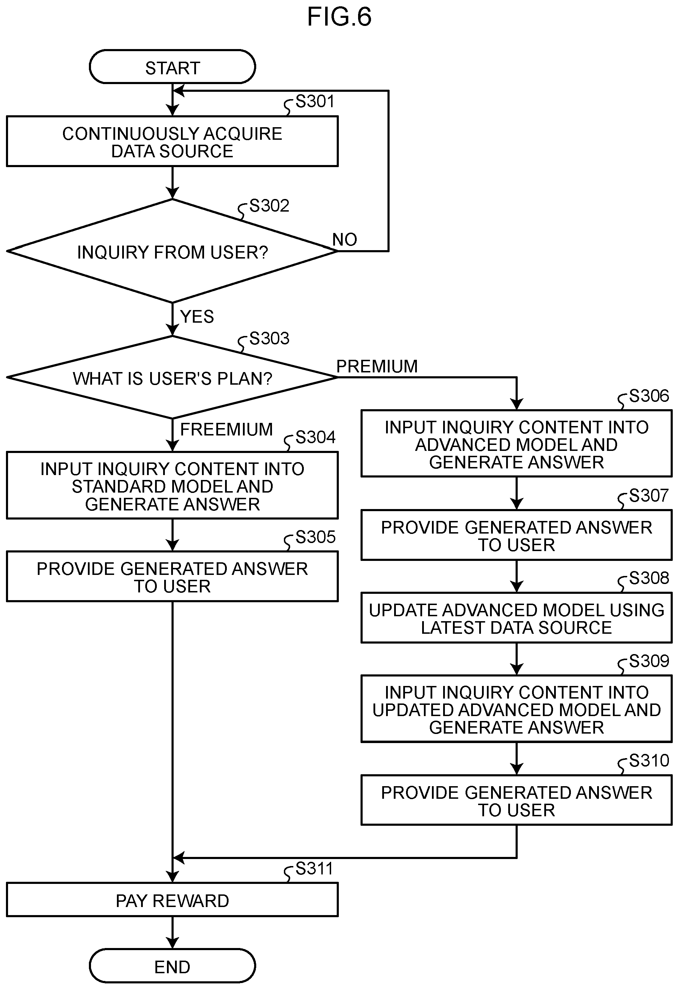

A flow of information providing processing will be described with reference to FIG. 6. FIG. 6 is a flowchart illustrating a flow of information providing processing. The information providing apparatus 10 can execute pre-training processing and information providing processing in parallel.

As shown in FIG. 6, the information providing apparatus 10 continuously acquires data sources (step S301). The information providing apparatus 10 determines whether there is an inquiry from a user (step S302).

If there is no inquiry from a user (step S302: No), the information providing apparatus 10 returns to step S301 and continues to acquire data sources. On the other hand, if there is an inquiry from a user (step S302: Yes), the information providing apparatus 10 determines a user's plan (step S303).

If the user's plan is the freemium plan (step S303: Freemium), the information providing apparatus 10 proceeds to step S304. On the other hand, if the user's plan is the premium plan (step S303: Premium), the information providing apparatus 10 proceeds to step S306.

In step S304, the information providing apparatus 10 inputs an inquiry content into the standard model and generates an answer. Then, the information providing apparatus 10 provides a generated answer to a user (step S305). Then, the information providing apparatus 10 pays a reward to a provider of a data source related to the answer (step S311) and ends the processing.

In step S306, the information providing apparatus 10 inputs an inquiry content into the advanced model and generates an answer. Then, the information providing apparatus 10 provides the generated answer to the user (step S307).

Further, the information providing apparatus 10 updates the advanced model using the latest data sources (step S308). The information providing apparatus 10 inputs an inquiry content into the updated advanced model (real-time model) and generates an answer (step S309). The information providing apparatus 10 provides the generated answer to the user (step S310).

According to this embodiment, by partnering with companies generally recognized as excellent companies and using such companies as data source providers, the reliability of the service that provides answers using the language model can be improved.

Furthermore, according to this embodiment, general answers can be provided to individual free members via the freemium plan, and high-precision answers can be provided to individual paid members, companies, and public institutions such as governments via the premium plan.

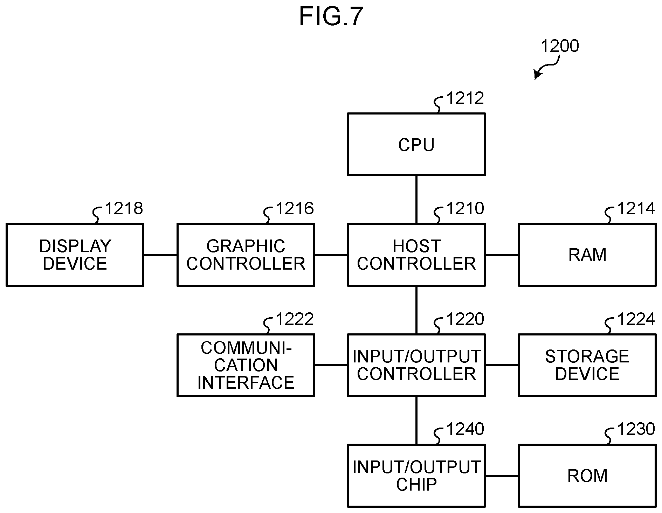

FIG. 7 is a diagram schematically illustrating an example of a computer hardware configuration functioning as the information providing apparatus. A program installed in the computer 1200 can cause the computer 1200 to function as one or more "units" of the apparatus according to this embodiment, or cause the computer 1200 to execute operations or the one or more "units" associated with the apparatus according to this embodiment, and/or cause the computer 1200 to execute the process or steps of the process according to this embodiment. Such a program may be executed by the CPU 1212 to perform specific operations associated with some or all of the blocks in the flowcharts and block diagrams described herein.

The computer 1200 according to this embodiment includes a CPU 1212, RAM 1214, and a graphic controller 1216, which are interconnected by a host controller 1210. The computer 1200 also includes input/output units such as a communication interface 1222, a storage device 1224, a DVD drive, and an IC card drive, which are connected to the host controller 1210 via an input/output controller 1220. The DVD drive may be a DVD-ROM drive or a DVD-RAM drive. The storage device 1224 may be a hard disk drive or a solid state drive. The computer 1200 also includes input/output units such as a ROM 1230 and a keyboard, which are connected to the input/output controller 1220 via an input/output chip 1240.

The CPU 1212 operates according to programs stored in the ROM 1230 and the RAM 1214, thereby controlling each unit. The graphic controller 1216 acquires image data generated by the CPU 1212 in a frame buffer provided in the RAM 1214 or in itself, and causes the image data to be displayed on the display device 1218.

The communication interface 1222 communicates with other electronic devices via a network. The storage device 1224 stores programs and data used by the CPU 1212 in the computer 1200. The DVD drive reads programs or data from a DVD-ROM or the like and provides them to the storage device 1224. The IC card drive reads programs and data from an IC card and/or writes programs and data to an IC card.

The ROM 1230 stores, for example, a boot program executed by the computer 1200 at activation and/or programs dependent on the hardware of the computer 1200. The input/output chip 1240 may also connect various input/output units to the input/output controller 1220 via USB ports, parallel ports, serial ports, keyboard ports, mouse ports, and the like.

The program is provided by a computer-readable storage medium such as a DVD-ROM or IC card. The program is read from the computer-readable storage medium, installed in the storage device 1224, the RAM 1214, or the ROM 1230, which are also examples of computer-readable storage media, and executed by the CPU 1212. The information processing described in these programs is read by the computer 1200 and enables cooperation between the program and the various types of hardware resources described above. The apparatus or method may be configured by realizing information operations or processing using the computer 1200.

For example, when communication is performed between the computer 1200 and an external device, the CPU 1212 executes a communication program loaded into the RAM 1214 and, based on the processing described in the communication program, may instruct the communication interface 1222 to perform communication processing. Under control of the CPU 1212, the communication interface 1222 reads transmission data stored in a transmission buffer area provided in the RAM 1214, the storage device 1224, DVD-ROM, or a recording medium such as an IC card, transmits the read transmission data to the network, or writes received data received from the network to a reception buffer area provided on the recording medium.

Further, the CPU 1212 may cause all or necessary parts of files or databases stored in external recording media such as the storage device 1224, DVD drive (DVD-ROM), or IC card to be read into the RAM 1214, and perform various types of processing on the data in the RAM 1214. The CPU 1212 may then write back the processed data to the external recording medium.

Various types of information such as various types of programs, data, tables, and databases may be stored in a recording medium and subjected to information processing. The CPU 1212 may perform various types of processing on data read from the RAM 1214, including various types of operations, information processing, condition judgments, conditional branches, unconditional branches, information search/replacement, etc., as described throughout this disclosure and specified by the instruction sequence of the program, and write back the results to the RAM 1214. The CPU 1212 may also search for information in files, databases, etc., in the recording medium. For example, when a plurality of entries each having a value of a first attribute associated with a value of a second attribute are stored in the recording medium, the CPU 1212 may search for entries among the plurality of entries that match a condition specifying the value of the first attribute, read the value of the second attribute stored in the entry, and thereby acquire the value of the second attribute associated with the first attribute that satisfies a predetermined condition.

The above-described program or software module may be stored in a computer-readable storage medium on or near the computer 1200. Further, a recording medium such as a hard disk or RAM provided in a server system connected to a dedicated communication network or the Internet can be used as a computer-readable storage medium, thereby providing the program to the computer 1200 via a network.

The blocks in the flowcharts and block diagrams in this embodiment may represent stages of a process in which operations are executed or "units" of an apparatus that perform the operations. Specific stages and "units" may be implemented by dedicated circuits, programmable circuits supplied with computer-readable instructions stored on a computer-readable storage medium, and/or processors supplied with computer-readable instructions stored on a computer-readable storage medium. The dedicated circuits may include digital and/or analog hardware circuits, integrated circuits (ICs), and/or discrete circuits. The programmable circuits may include reconfigurable hardware circuits such as field programmable gate arrays (FPGAs) and programmable logic arrays (PLAs), which include logic AND, logic OR, exclusive OR, NAND, NOR, and other logic operations, flip-flops, registers, and memory elements.

A computer-readable storage medium may include any tangible device capable of storing instructions to be executed by an appropriate device, and as a result, a computer-readable storage medium having instructions stored therein constitutes a product including instructions that can be executed to perform the operations specified in the flowcharts or block diagrams. Examples of computer-readable storage media may include electronic storage media, magnetic storage media, optical storage media, electromagnetic storage media, semiconductor storage media, and the like. More specific examples of computer-readable storage media may include floppy disks, diskettes, hard disks, random access memory (RAM), read-only memory (ROM), erasable programmable read-only memory (EPROM or flash memory), electrically erasable programmable read-only memory (EEPROM), static random access memory (SRAM), compact disc read-only memory (CD-ROM), digital versatile disc (DVD), Blu-ray discs, memory sticks, integrated circuit cards, and the like.

Computer-readable instructions may include assembler instructions, instruction set architecture (ISA) instructions, machine instructions, machine-dependent instructions, microcode, firmware instructions, state-setting data, or source code or object code written in any combination of one or more programming languages, including object-oriented programming languages such as Smalltalk, JAVA, C++, and conventional procedural programming languages such as the "C" programming language or similar programming languages.

Computer-readable instructions may be provided to a processor of a general-purpose computer, special-purpose computer, or other programmable data processing apparatus, or a programmable circuit, locally or via a wide area network (WAN) such as a local area network (LAN) or the Internet, to cause the computer, special-purpose computer, or other programmable data processing apparatus, or programmable circuit, to execute the instructions to generate means for performing the operations specified in the flowcharts or block diagrams. Examples of processors include computer processors, processing units, microprocessors, digital signal processors, controllers, microcontrollers, and the like.

The present invention has been described above using embodiments, but the technical scope of the present invention is not limited to the scope described in the above embodiments. It will be apparent to those skilled in the art that various modifications or improvements can be made to the above embodiments. It is clear from the description of the claims that embodiments with such modifications or improvements are also included in the technical scope of the present invention.

It should be noted that, in the claims, specification, and drawings, unless explicitly stated as "prior to," "preceding," etc., or unless the output of a previous process is used in a subsequent process, the execution order of operations, procedures, steps, and stages in the apparatus, system, program, and method shown may be implemented in any order. Even if, for convenience, terms such as "first," "next," etc. are used in the operation flow in the claims, specification, and drawings, this does not mean that implementation in this order is essential.

### Reference Signs List

- 10: Information providing apparatus
- 11: Communication unit
- 12: Storage unit
- 13: Control unit
- 31: Acquisition unit
- 32: Determination unit
- 33: Collection unit
- 34: Generation unit
- 35: Providing unit
- 36: Billing unit
- 37: Reward unit
- 121: User information
- 122: Standard model information
- 123: Advanced model information
- 124: Real-time model information

## Claims

1. An information providing apparatus comprising:
a generation unit configured to generate a model that generates an answer to a prompt input by a user, the model being generated by learning a data source provided from a provider that satisfies conditions relating to reliability;
a providing unit configured to provide the answer generated by the model to the user; and
a billing unit configured to charge the user a usage fee according to a value of the answer.

2. The information providing apparatus according to claim 1, wherein
the billing unit is configured to charge, as the usage fee, an amount according to a profit obtained by the user from the provided answer.

3. The information providing apparatus according to claim 2, wherein
the billing unit is configured to charge, as the usage fee, an amount obtained by multiplying the profit obtained by the user by a coefficient less than 1.

4. The information providing apparatus according to claim 2, wherein
the billing unit is configured to charge, as the usage fee, a predetermined amount when the profit obtained by the user cannot be grasped.

5. The information providing apparatus according to claim 1, wherein
the billing unit is configured to charge, as the usage fee, an amount according to a fixed cost that could be reduced by business improvement when the answer relating to business improvement is provided.

6. The information providing apparatus according to claim 1, wherein
the billing unit is configured to charge, as the usage fee, an amount according to a number of times the answer relating to knowledge has been provided to other users in a past when the answer relating to knowledge is provided.

7. The information providing apparatus according to claim 1, further comprising:
a collection unit configured to collect the data source and information on an amount to be charged if the data source is used in an answer from the provider, wherein
the billing unit is configured to charge the usage fee based on the information on the amount collected by the collection unit.

8. The information providing apparatus according to claim 7, wherein
the billing unit is configured to determine a validity of the information on the amount collected by the collection unit, and to charge the amount as the usage fee when the amount is determined to be valid.

9. The information providing apparatus according to claim 8, wherein
the billing unit is configured to calculate an average value of amounts set for other data sources of a same or similar data type as the data source, and to determine that the amount is valid when deviation from the average value is less than a predetermined value.

10. An information providing method executed by an information providing apparatus, comprising:
a generation step of generating a model that generates an answer to a prompt input by a user, the model being generated by learning a data source provided from a provider that satisfies conditions relating to reliability;
a providing step of providing the answer generated by the model to the user;
and a billing step of charging the user a usage fee according to a value of the answer.

11. An information providing program for causing a computer to execute:
a generation step of generating a model that generates an answer to a prompt input by a user, the model being generated by learning a data source provided from a provider that satisfies conditions relating to reliability;
a providing step of providing the answer generated by the model to the user;
and a billing step of charging the user a usage fee according to a value of the answer.
